# EUROPEAN PATENT APPLICATION

(11) **EP 4 523 536 A1**
(43) Date of publication of application: **19.03.2025**
(21) Application number: 24200713.6
(22) Date of filing: 17.09.2024
(51) Int. Cl.: A22C 11/00, A23B 4/005, A23B 4/06, A23B 2/44, A23L 5/10, A23L 13/60, B65G 15/14

(54) **METHOD FOR INDUSTRIAL PREPARATION OF FROZEN DEEP-FRIED SNACKS**

(30) Priority: 18.09.2023 BE 202305765
(71) Applicant: Beltaste Hamont NV, 3930 Hamont (BE)
(72) Inventor: MUYSHONDT, Leon, 3930 Hamont (BE)
(74) Representative: Brantsandpatents bv

(57) **Abstract**

The current invention relates to a method for the industrial preparation of frozen deep-fried snacks, comprising a step of cooking deep-fried snacks based on a meat paste in a cooking device, after which the cooked deep-fried snacks are dried and frozen to a temperature of -18°C or lower, the cooking device comprising: a) a water bath suitable for containing and heating a liquid, further comprising an aerator for aerating the liquid; and b) a first pair of conveyor belts comprising a first conveyor belt with a first conveying surface extending in a longitudinal direction, and a second conveyor belt with a second conveying surface extending in the longitudinal direction, wherein at least a part of the first conveyor belt and at least a part of the second conveyor belt are placed at an adjustable distance from each other for clamping the deep-fried snack between their conveying surfaces.

## Description

### TECHNICAL FIELD

The invention relates to a method for the industrial preparation of frozen deep-fried snacks, comprising a step of cooking deep-fried snacks based on a meat paste in a cooking device.

### PRIOR ART

Deep-fried snacks such as hamburgers, meatballs and frikandels enjoy enormous popularity. Usually, these are made from a uniform meat paste that is subsequently shaped through a shaping process, heated by means of cooking or frying, and finally frozen.

Heating by means of cooking usually involves immersing the deep-fried snacks based on the meat paste in a bath of warm water, another liquid, or hot oil. Normally, the deep-fried snacks are placed in a tray and completely immersed in the liquid or oil, or they are conveyed over a conveyor belt that runs through the liquid or oil.

A challenge with conventional heating processes is that the snacks in the fluid can shift relative to each other or even start to float, causing them to come into contact with each other and with the walls of the bath. This can cause them to become damaged and possibly even break, leading to losses, waste, and product loss. Moreover, after the heating process, the cooked snacks must be neatly aligned before they are frozen, which requires additional time and labor. The process of carefully positioning and aligning each individual snack can be time-consuming, even when done mechanically, and especially with large production volumes. This results in increased production costs and again carries the risk that snacks may become damaged or broken.

Methods for preparing meat-based food products are known, for example, from DE 102 008 012 783 and US 20 170 112 150. The first description, DE '783, relates to a device for transporting sausages in which the sausages are guided between two boundaries, such as for instance endless belts or spaced channel walls, that are placed at a variable distance from each other and where that distance is adjustable because the boundaries are movable relative to each other. This mechanism ensures that the distance remains the same over the entire length during transport and/or that different sausage thicknesses can be accommodated. US '150 describes a device for transferring sausage portions. A first conveying device, equipped with a lower and an upper circumferential transport means, transports the sausage portions in the longitudinal direction between these two transport means. While the sausage portions move between the upper and lower transport means, they are pushed sideways by an ejection device to a second conveying device. This second conveying device, for example a conveyor belt, receives the sausage portions from the first conveying device, preferably in a fixed discharge. Moreover, the distance between the first and second conveying device can be adjusted to the size of the sausage portions.

Although these systems limit the shifting of the sausage portions during transport relative to each other, maintain the alignment of these sausage portions, and thereby reduce the breakage of the snacks, significant challenges concerning breakage and damage remain, especially during the cooking process of such meat products.

The current invention aims to find a solution for at least some of the aforementioned problems, among other things by providing an integrated system that not only prevents snacks from shifting during transport but also guarantees an efficient cooking step. This system ensures an even preparation of deep-fried snacks, minimizes breakage, and increases the processing capacity of the cooking installation, while preferably lowering the production costs.

### SUMMARY OF THE INVENTION

The invention relates to a method for the industrial preparation of frozen deep-fried snacks according to claim 1. More specifically, this method comprises a step of cooking deep-fried snacks based on a meat paste in a cooking device, after which the cooked deep-fried snacks are dried and frozen to a temperature of -18°C or lower.

The cooking device comprises: a) a water bath suitable for containing and heating a liquid, further comprising an aerator comprising a pipe system with holes for aerating the liquid; and b) a first pair of conveyor belts comprising a first conveyor belt with a first conveying surface extending in a longitudinal direction, suitable for supplying deep-fried snacks according to the longitudinal direction from a supply side to a discharge side, and a second conveyor belt with a second conveying surface extending in the longitudinal direction, wherein at least a part of the first conveyor belt and at least a part of the second conveyor belt are placed at an adjustable distance from each other for clamping the deep-fried snack between their conveying surfaces, wherein the adjustable distance is measured transversely to the conveying surface of the first conveyor belt and at the discharge side, and wherein the first pair of conveyor belts is movable so that at least the parts of the first and second conveyor belts for clamping the deep-fried snacks can be moved into or out of the liquid in the water bath, wherein during the cooking step the deep-fried snacks are guided through the liquid in the water bath over the first conveyor belt from the supply side to the discharge side at a certain speed, wherein the liquid has a predetermined temperature and is aerated, wherein the adjustable distance is chosen and wherein the speed of the second conveyor belt can vary in speed.

Here, the cooking device in combination with the chosen parameters means a very efficient cooking step wherein the deep-fried snacks are cooked evenly and less breakage in the snacks is achieved. Because the temperature of the liquid in the bath is homogeneously distributed, the speed of the conveyor belts is optimized, and the adjustable distance is precisely chosen, the snacks are also not cooked longer than necessary, which has a positive influence on both the taste and texture of the snacks, and saves energy. In addition, the snacks are moved over the conveying surfaces in a controlled manner by the clamping and will hardly shift in relation to each other, which prevents the snacks from breaking. More snacks can also be cooked simultaneously per surface area of the conveyor belt and/or the surface area of the water bath, thereby giving the cooking installation a higher processing capacity. Finally, the deep-fried snacks after the cooking step can be dried and frozen directly without having to line up and/or separate all the snacks first.

Preferred embodiments of the method are described in claims 2 to 13.

### DESCRIPTION OF THE FIGURES

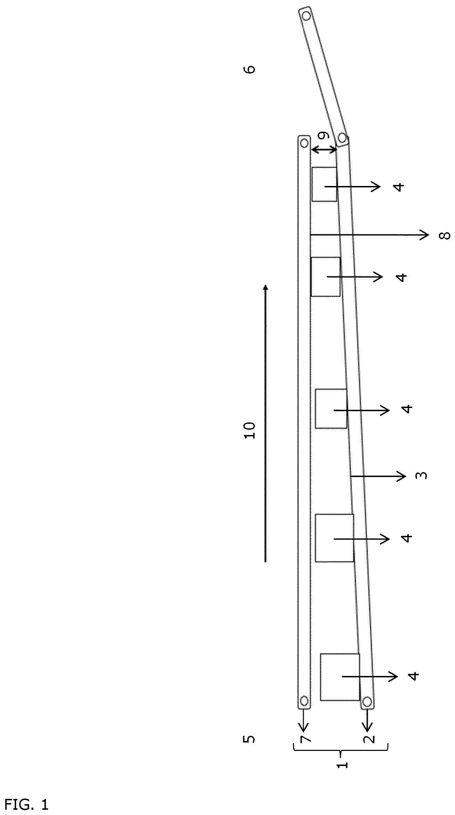

Figure 1 schematically shows a first pair of conveyor belts (1) as used in the method for the industrial preparation of frozen deep-fried snacks according to an embodiment of the present invention.

### DETAILED DESCRIPTION

The invention relates to a method for the industrial preparation of frozen deep-fried snacks, wherein the method includes a step of cooking deep-fried snacks based on a meat paste in a cooking device, after which the cooked deep-fried snacks are dried and frozen to a temperature of -18°C or lower.

The cooking device comprises:
a) a water bath suitable for containing and heating a liquid, further comprising an aerator comprising a pipe system with holes for aerating the liquid; and
b) a first pair of conveyor belts comprising a first conveyor belt with a first conveying surface extending in a longitudinal direction, suitable for conveying deep-fried snacks in the longitudinal direction from a supply side to a discharge side, and a second conveyor belt with a second conveying surface extending in the longitudinal direction, wherein at least a part of the first conveyor belt and at least a part of the second conveyor belt are placed at an adjustable distance from each other for clamping the deep-fried snack between their conveying surfaces, wherein the adjustable distance is measured transversely to the conveying surface of the first conveyor belt and at the discharge side, and wherein the first pair of conveyor belts is movable so that at least the parts of the first and second conveyor belts for clamping the deep-fried snacks can be moved into or out of the liquid in the water bath.

Hereby, during the cooking step, the deep-fried snacks are guided through the liquid in the water bath over the first conveyor belt from the supply side to the discharge side at a certain speed, the liquid has a predetermined temperature and is aerated, the adjustable distance is determined, and the second conveyor belt can vary in speed.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

As used herein, the term "roller conveyor" is synonymous with "conveyor belt."

In a first aspect, the invention relates to a method for the industrial preparation of frozen deep-fried snacks, comprising a step of cooking deep-fried snacks based on a meat paste in a cooking device, after which the cooked deep-fried snacks are dried and frozen to a temperature of -18°C or lower.

The cooking device comprises:
a) a water bath suitable for containing and heating a liquid, further comprising an aerator comprising a pipe system with holes for aerating the liquid; and
b) a first pair of conveyor belts comprising a first conveyor belt with a first conveying surface extending in a longitudinal direction, suitable for conveying deep-fried snacks in the longitudinal direction from a supply side to a discharge side, and a second conveyor belt with a second conveying surface extending in the longitudinal direction.

Therein, at least a part of the first conveyor belt and at least a part of the second conveyor belt are placed at an adjustable distance from each other for clamping the deep-fried snack between their conveying surfaces, wherein the adjustable distance is measured transversely to the conveying surface of the first conveyor belt and at the discharge side.

"Clamping" in the context of the current method means holding, guiding, and/or keeping in its desired position relative to the conveyor belts during the cooking step. Preferably, the deep-fried snacks are not damaged/pushed in by the clamping of the conveyor belts. The use of the term "clamping" implies that there is a sufficiently firm, but non-crushing grip on the deep-fried snacks, where they are held in place and safely transported during the cooking process.

The adjustable distance between the first and second conveying surfaces is set between 150 mm and 250 mm, such as 150 mm, 155 mm, 160 mm, 165 mm, 170 mm, 175 mm, 180 mm, 185 mm, 190 mm, 195 mm, 200 mm, 205 mm, 210 mm, 215 mm, 220 mm, 225 mm, 230 mm, 235 mm, 240 mm, 245 mm, or 250 mm. This allows the optimal distance to be set for each type of deep-fried snack, such as a frikandel or a meatball, where the conveying surfaces clamp the deep-fried snacks sufficiently so that they move in a controlled manner over the conveying surfaces and shift little relative to each other, without clamping too much, which would cause the snacks to be compressed and/or damaged.

Additionally, the first pair of conveyor belts is movable so that at least the parts of the first and second conveyor belts for clamping the deep-fried snacks can be moved into or out of the liquid in the water bath.

During the cooking step, the deep-fried snacks are guided through the liquid in the water bath over the first conveyor belt from the supply side to the discharge side at a speed between 1.0 m/min and 3.5 m/min. Preferably, the speed of the first conveyor belt is approximately 1.0 m/min, 1.5 m/min, 2.0 m/min, 2.5 m/min, 3.0 m/min, or 3.5 m/min.

The second conveyor belt preferably has a speed that can vary between 1.0 m/min and 3.5 m/min. Preferably, the speed of the first conveyor belt is approximately 1.5 m/min, 2.0 m/min, 2.5 m/min, 3.0 m/min, or 3.5 m/min.

Here, the speed is either smaller or greater than the speed of the first conveyor belt, or equal to the speed of the first conveyor belt. In the first case, the snacks will be rotated around their axis by the clamping effect of the conveying surfaces, ensuring a more even cooking process. For example, the speed of the second conveyor belt is 0.1%, 0.2%, 0.3%, 0.4%, 0.5%, 0.6%, 0.7%, 0.8%, 0.9% or 1.0% slower than the speed of the first conveyor belt. Preferably, the speed difference is no higher than 1% to avoid damage to the deep-fried snacks. Since this rotation around the axis of the deep-fried snacks is not important for all types of snacks, the speed of both conveyor belts can also be equal, so the deep-fried snacks are not rotated around their axis.

The liquid in the water bath has a temperature between 80 and 90°C, such as 81°C, 82°C, 83°C, 84°C, 85°C, 86°C, 87°C, 88°C, 89°C or 90°C, preferably between 81 and 89°C, more preferably between 82 and 88°C, more preferably between 83 and 87°C, more preferably about 84°C, 85°C, or 86°C.

Preferably, the deep-fried snacks are conducted through the liquid for 20 to 40 minutes, preferably for 25 to 35 minutes, such as 30 minutes.

Preferably, cooking achieves a core temperature of the cooked deep-fried snacks between 73°C and 80°C.

The liquid in the water bath is preferably water such as tap water, or water with brown sugar, optionally comprising further auxiliary substances. The use of water with brown sugar gives the deep-fried snacks a sweeter taste and provides a browner, "baked" appearance to pale deep-fried snacks.

In addition, the liquid in the water bath is aerated by means of the aerator. This ensures the temperature is evenly distributed over the water bath, and the snacks are cooked evenly. The aerator preferably comprises a blower and a pipe system with holes, wherein the pipe system is placed on the bottom of the water bath, wherein it is always placed between the water bath and the pair of conveyor belts. When the blower is activated, air currents will rise from the holes to the liquid surface, causing the liquid to be set in motion and the temperature of the liquid to be evenly distributed. In addition, the air currents and the resulting movement of the liquid also ensure that the snacks do not stick together during the cooking step.

The air that forms the air currents created by the aerator is preferably dried and filtered food-grade compressed air. Preferably, the pipe system includes a hole with a diameter of 0.6 mm every 100 mm. The air is preferably driven through the holes at a working pressure between 0.2 and 3 bar.

The advantage of this method is that a very efficient cooking step is achieved in which the deep-fried snacks are cooked evenly and less breakage in the snacks is obtained. Because the temperature of the liquid in the bath is homogeneously distributed, the speed of the conveyor belts is optimized, and the adjustable distance is precisely chosen, the snacks are also not cooked longer than necessary, which has a positive influence on both the taste and texture of the snacks, and saves energy. In addition, the snacks are moved over the conveying surfaces in a controlled manner by the clamping and will hardly shift in relation to each other, which prevents the snacks from breaking. More snacks can also be cooked simultaneously per surface area of the conveyor belt and/or the surface area of the water bath, thereby giving the cooking installation a higher processing capacity. Finally, the deep-fried snacks after the cooking step can be dried and frozen directly without having to line up and/or separate all the snacks first.

According to an embodiment of the method, the parts of the first and second conveyor belts for clamping the deep-fried snacks can be positioned relative to each other at an angle of between 0° and 2°, such as an angle of 0.5°, 1.0°, 1.5°, or 2.0°. Preferably, as a result, the distance between the conveying surfaces, measured perpendicularly to the surfaces, is smaller at the discharge side than at the supply side. This allows the deep-fried snacks to be better guided during the cooking step and stay better aligned with each other. During cooking, the deep-fried snacks based on a meat paste will slightly shrink, up to 20% in diameter of the snacks, which gives them more freedom of movement between the conveying surfaces. The angle ensures that this freedom of movement remains limited. Additionally, the uncooked deep-fried snacks are also less firm and therefore more susceptible to breakage. By keeping the adjustable distance on the supply side slightly larger, it is avoided that the conveyor belts damage the uncooked deep-fried snacks on the supply side.

According to an embodiment, the parts of the first and second conveyor belts for clamping the deep-fried snacks are positioned parallel to each other. In other words, the angle between the conveyor belts is 0°.

According to an embodiment, the amount of liquid in the water bath is adjusted so that the deep-fried snacks are always completely submerged when they are guided through the liquid. This guarantees an even cooking of the meat paste.

According to an embodiment, the first and second conveyor belt are continuously driven. According to another or further embodiment, the deep-fried snacks in step b) are supplied continuously.

According to an embodiment, the cooking device comprises a second and optionally a third pair of conveyor belts, identical to the first pair of conveyor belts, which are also movable so that at least the parts of the first and second conveyor belts of the second pair of conveyor belts, and optionally the third pair of conveyor belts, for clamping the deep-fried snacks can be moved into or out of the liquid in the water bath. This allows more deep-fried snacks to be cooked simultaneously in the water bath, distributed across two or three pairs of conveyor belts.

According to an embodiment, the cooked deep-fried snacks are dried in a drying process, wherein the cooked deep-fried snacks are conveyed through an air current produced by air knives.

As used herein, the term "air knife" relates to a device for producing a sheet-like air current by driving air through a slot. Preferably, the slot has a width of at least 0.10 mm to at most 20 mm, more preferably a width of at least 0.50 mm to at most 10.0 mm or a width of at least 0.50 mm and at most 5.0 mm, or a width of at least 0.50 mm and at most 2.0 mm, and most preferably a width of at least approximately 1.0 mm to at most approximately 1.2 mm. This can ensure optimum drying efficiency by regulating the speed of the air current and, if necessary, the pressure.

As used herein, the term "slot" refers to an elongated opening. The dimensions of a slot can be characterized by two characteristic measurements: its length and its width; with the width many times smaller than the length. The length of a slot can be interpreted as the extent of its longest characteristic dimension, as measured along the longitudinal extension of the slot. As used herein, the term "width," when referring to a slot, can be interpreted as the characteristic length of the slot in the direction perpendicular to the direction in which the length of the slot is measured.

Drying the cooked deep-fried snacks ensures that the free moisture is efficiently and quickly removed from the cooked deep-fried snacks before they are frozen. This occurs partly by actively blowing away moisture droplets from the snacks, and further by evaporating moisture on the surface of these snacks. As a result, the deep-fried snacks stick less or not at all to each other and to the freezer which is used for freezing the deep-fried snacks. Furthermore, the drying process has a positive impact on the shape retention of the deep-fried snacks before freezing, resulting in fewer deep-fried snacks with an aberrant shape after freezing compared to a method without a drying process between cooking and freezing. Additionally, actively blowing away droplets is more efficient than known drying systems where air is circulated over the snacks and the moisture simply evaporates.

According to an embodiment, the deep-fried snacks are frozen using an in-line freezer, preferably a CO₂ in-line freezer.

An "in-line freezer" is a freezing installation in which food products are placed on a conveyor belt and guided through the freezer. This enables a continuous production, cooking, and freezing process.

Preferably, the in-line freezer is a CO₂ freezer. CO₂ freezers, which operate based on carbon dioxide (CO₂) as a refrigerant, offer various advantages in food production, including a quick freezing time which results in a rapid cooling of the product, thereby limiting the formation of large ice crystals and preserving the quality, taste, moisture content, nutritional value, and texture of the food. CO₂ freezers are also energy-efficient and environmentally friendly.

According to another or further embodiment, the deep-fried snacks are frozen using a spiral freezer.

A spiral freezer is a type of freezer in which deep-fried snacks are guided in a spiral-shaped path while being exposed to cold air currents. This helps with an even freezing of the product and allows for a higher processing capacity than, for example, a tunnel freezer or plate freezer which do not have a spiral-shaped path. Preferably, the spiral freezer includes a booster pump that supplies refrigerant under pressure and is suitable to operate between -1°C and -40°C. The booster pump ensures that the deep-fried snacks can be frozen quickly and efficiently, which results in a better texture and quality of the final product.

According to an embodiment, the freezing of the deep-fried snacks takes place at an air temperature between -32°C and -39°C, and preferably for at least 30 minutes.

According to an embodiment, the meat paste is divided into one or more portions by means of a shaping process comprising an extrusion process, where the deep-fried snacks are formed, which are then cooked in the cooking device. According to a non-limiting embodiment, a rod is formed from the meat paste by means of extrusion. For example, the meat paste is pressed through a die plate for this purpose. At regular time intervals, this forming process is interrupted, with the rod being cut through. Preferably, this is done by means of a servo-controlled diaphragm that is alternately opened and closed. In this way, sausages are formed from meat paste, whereby these sausages are essentially the same length.

According to a preferred embodiment of the method, the mass of an individual portion is between 8g and 500g, such as between 25g and 300g, or between 50g and 200g. Preferably, the mass of each portion is approximately equal to about 50g, 100g, or 250g. According to a non-limiting embodiment, each portion is a sausage with a mass of approximately 100g. An advantage of this is that each portion thereby approximately corresponds to the standard consumed amount of the deep-fried snack, by a single person and during a single meal.

According to an embodiment, the meat paste is a finely ground meat paste with a particle size between 1 and 8mm. This finely ground meat paste is preferably obtained using a method in which the meat is both ground and cut.

According to an embodiment, the meat paste comprises chicken and/or pork. Preferably, the meat comprises both chicken and pork, and more preferably, the pork is pork bacon. According to a non-limiting embodiment, meat from cattle and/or horses is also added. An advantage of using chicken is that it is cheaper and gives structure to the meat paste. It also increases the volume of meat paste. An advantage of using pork is that it contributes to the flavor of the meat paste and the resulting deep-fried snack.

According to an embodiment, one or more additives and/or flavorings are added to the meat paste chosen from the group of salt, bread crumbs, starch, and water.

According to a preferred embodiment of the method, salt is added in the form of a salt solution in water. More preferably, it concerns brine, being a quasi-saturated solution of salt in water. An advantage of this is that the added amount of salt can be dosed better in this case. According to an alternative embodiment, the salt is added in the form of granulated salt.

According to a preferred embodiment of the method, the added mass percentage of salt is at least 0.5% and at most 2.5%. An advantage of the addition of salt, according to the specified concentration, is that it acts as a flavor enhancer without being perceived as disturbing. Salt also helps in stabilizing the proteins in the meat paste, and the binding of this paste.

According to a preferred form of the method, the added mass percentage of breadcrumbs and/or starch is at least 5% and at most 15%. An advantage of adding starch, according to the specified concentration, is that starch contributes to the binding of the meat paste.

According to a preferred embodiment of the method, herbs and spices are added, chosen from the group of black pepper, cumin, coriander, cloves, nutmeg and cayenne pepper. Preferably, allergies are taken into account when selecting these herbs and spices. An advantage of these herbs and spices is that they give the deep-fried snack a distinct and tasty flavor.

According to a preferred form of the method, the herbs and spices are added in the form of powders and/or mixtures of powders. Preferably, the herbs and spices are added in the form of a single powder mixture. An advantage of using (fine) powders is that the flavor of the herbs and spices is optimally transferred to the meat paste, and that the resulting deep-fried snack is homogeneous in taste and texture.

Preferably, between 1 and 2.5% salt, between 5 and 15% bread crumbs and starch, and up to 2% herbs and spices are added.

According to a preferred form of the method, the meat paste is prepared in quantities with an individual mass between 400kg and 800kg. The individual mass is preferably approximately 600kg. An advantage of this is that such an amount of meat paste is compatible with the capacity of standard industrial installations.

In what follows, the invention is described by way of non-limiting examples illustrating the invention, and which are not intended to and should not be interpreted as limiting the scope of the invention.

### EXAMPLE / DESCRIPTION OF THE DRAWINGS

### Example 1: Method for the industrial preparation of frozen deep-fried snacks.

A meat paste based on chicken and pork is prepared where the paste has a particle size between 1 and 8mm. The meat paste further comprises water, between 0.5 and 2.5 m% salt, between 5 and 15 m% breadcrumbs and starch combined, and a maximum of 2 m% of herbs and spices in powdered form chosen from black pepper, cumin, coriander, cloves, nutmeg, and cayenne pepper.

This meat paste is divided into portions by means of an extrusion process, wherein the portions comprise about 50g, 100g or about 250g of meat paste, and form rod-shaped sausages or balls.

These portions are then heated by cooking in a bath with warm water between 80 and 90°C.

Figure 1 schematically shows a first pair of conveyor belts (1) comprising:
- a first conveyor belt (2) with a first conveying surface (3) extending in a longitudinal direction (10), suitable for supplying deep-fried snacks (4) according to the longitudinal direction (10) from a supply side (5) to a discharge side (6), and
- a second conveyor belt (7) with a second conveying surface (8) extending in the longitudinal direction (10),
wherein at least a part of the first conveyor belt and at least a part of the second conveyor belt are placed at an adjustable distance (9) from each other for clamping the deep-fried snack (4) between their conveying surfaces (3), (8).

The first pair of conveyor belts is movable and is placed in a hot water bath containing water between 80 and 90°C for cooking deep-fried snacks, with an aerator in between which includes a pipe system with holes for aerating the water. This aerator ensures a homogeneous distribution of the water temperature, and thus a homogeneous cooking of the snacks clamped between the conveyor belt surfaces.

During the cooking step, the deep-fried snacks (4) are guided through the liquid in the water bath over the first conveyor belt (2) from the supply side (5) to the discharge side (6) at a speed between 1 and 3 m/min. Meanwhile, the speed of the second conveyor belt (7) also varies between 1 and 3 m/min. Preferably, the speed of both conveyor belts (2) and (7) is approximately equal but not entirely equal, wherein the speed of the second conveyor belt (7) is preferably between 0.2% and 0.9% slower than the speed of the first conveyor belt (2). Here the deep-fried snack (4) will be rotated slightly between the conveyor belts (2) and (7). It is also possible to keep the speed of both conveyor belts (2) and (7) equal, wherein the deep-fried snacks (4) remain in place relative to the belts (2) and (7).

The adjustable distance between the first conveyor belt (2) and the second conveyor belt (7) measured at the discharge side (6) is preferably adjustable between 150 mm and 250 mm when in operation. It is hereby guaranteed that the parts of the conveyor belts sufficiently hold or clamp the deep-fried snacks (4), depending on the type of deep-fried snack (4) provided on the belts.

(Parts of) the first and second conveyor belts for clamping the deep-fried snacks (4) can be positioned at an angle up to 2° relative to each other in order to still gently hold/keep in place the shrinking deep-fried snacks during cooking between the surfaces.

The cooked deep-fried snacks are then placed on a roller conveyor on the discharge side (not shown in the figure) where the snacks are led through and dried using an air current produced by air knives, and then frozen in an in-line freezer. The frozen deep-fried snacks are then packed.

The present invention should not be construed as being limited to the embodiments described above and certain modifications or changes may be added to the examples described without having to re-evaluate the appended claims.

## Claims

1. Method for the industrial preparation of frozen deep-fried snacks, comprising a step of cooking deep-fried snacks based on a meat paste in a cooking device, after which the cooked deep-fried snacks are dried and frozen to a temperature of -18°C or lower, the cooking device comprising:
a) a water bath suitable for containing and heating a liquid, further comprising an aerator comprising a pipe system with holes for aerating the liquid; and
b) a first pair of conveyor belts (1) comprising a first conveyor belt (2) with a first conveying surface (3) extending in a longitudinal direction (10), suitable for conveying deep-fried snacks (4) in the longitudinal direction (10) from a supply side (5) to a discharge side (6), and a second conveyor belt (7) with a second conveying surface (8) extending in the longitudinal direction (10), wherein at least a part of the first conveyor belt and at least a part of the second conveyor belt are placed at an adjustable distance (9) from each other for clamping the deep-fried snack (4) between their conveying surfaces (3), (8), wherein the adjustable distance (9) is measured transversely to the conveying surface of the first conveyor belt (3) and on the discharge side (6), and
wherein the first pair of conveyor belts (1) is movable so that at least the parts of the first and second conveyor belts for clamping the deep-fried snacks (4) can be moved into or out of the liquid in the water bath,
wherein during the cooking step the deep-fried snacks (4) are guided through the liquid in the water bath over the first conveyor belt (2) from the supply side (5) to the discharge side (6) at a speed ranging between 1 and 3 m/min, wherein the liquid has a temperature between 80 and 90°C and is aerated via the aerator and wherein the adjustable distance (9) between the first (3) and second conveying surfaces (8) is set between 150 mm and 250 mm, and further wherein the speed of the second conveyor belt (7) can vary between 1 and 3 m/min.

2. The method according to claim 1, wherein the parts of the first and second conveyor belts for clamping the deep-fried snacks (4) can be positioned at an angle of 0 to 2° relative to each other.

3. The method according to claims 1 or 2, wherein the parts of the first and second conveyor belts for clamping the deep-fried snacks (4) are positioned parallel to each other.

4. The method according to any of the preceding claims, wherein the speed of the second conveyor belt (7) is higher or lower than the speed of the first conveyor belt (2).

5. The method according to any of the preceding claims, wherein the amount of liquid in the water bath is adjusted such that the deep-fried snacks (4) are always completely submerged when they are passed through the liquid.

6. The method according to any of the preceding claims, wherein the cooking device comprises a second and optionally a third pair of conveyor belts identical to the first pair of conveyor belts (1), which can be moved so that at least the parts of the first and second conveyor belts of the second and optionally third pair of conveyor belts for clamping the deep-fried snacks can be moved into or out of the liquid in the water bath.

7. The method according to any of the preceding claims, wherein the cooked deep-fried snacks are dried in a drying process, wherein the cooked deep-fried snacks are conveyed through an air current produced by air knives.

8. The method according to any of the preceding claims, wherein the deep-fried snacks are frozen using an in-line freezer, preferably a COz in-line freezer.

9. The method according to any of the preceding claims, wherein the deep-fried snacks are frozen by means of a spiral freezer.

10. The method according to any of the preceding claims, wherein the meat paste is divided into one or more portions by means of a shaping process comprising an extrusion process, where the deep-fried snacks are formed, which are then cooked in the cooking device.

11. The method according to claim 10, wherein during the extrusion process, the meat paste is pressed through a die plate to form one or more portions.

12. The method according to any of the preceding claims, wherein the meat paste is a finely ground meat paste with a particle size between 1 and 8 mm.

13. The method according to any of the preceding claims, wherein the meat paste comprises chicken and/or pork.
